# EUROPEAN PATENT APPLICATION

(11) **EP 4 579 824 A1**
(43) Date of publication of application: **02.07.2025**
(21) Application number: 23856961.0
(22) Date of filing: 26.06.2023
(51) Int. Cl.: H01M 8/0221, H01M 8/0206, H01M 8/0213, H01M 8/0226

(54) **FUEL CELL SEPARATOR MATERIAL, FUEL CELL SEPARATOR MANUFACTURING METHOD, AND FUEL CELL SEPARATOR**

(30) Priority: 25.08.2022 JP 2022134030
(71) Applicant: Arisawa Mfg. Co., Ltd., Joetsu-shi, Niigata 943-8610 (JP)
(72) Inventor: HATTORI, Takuya, Toyota-shi, Aichi 471-8571 (JP); NONOYAMA, Nobuaki, Toyota-shi, Aichi 471-8571 (JP); TAI, Makoto, Joetsu-shi, Niigata 943-8610 (JP); YOSHIDA, Akira, Joetsu-shi, Niigata 943-8610 (JP); ISHIKAWA, Yurina, Joetsu-shi, Niigata 943-8610 (JP); DEGUCHI, Hideaki, Joetsu-shi, Niigata 943-8610 (JP)
(74) Representative: Winter, Brandl - Partnerschaft mbB
(86) International application number: PCT/JP2023/023622
(87) International publication number: WO 2024/042844

(57) **Abstract**

A fuel cell separator material, with which a fuel cell separator having sufficient electrical conduction properties and also having improved drainage performance at the same time can be manufactured by a simple process, is provided.

A fuel cell separator material includes: a composite material containing electrically conductive particles and a binder resin; and soluble resin layers located on both sides of the composite material.

## Description

### Technical Field

The present application relates to fuel cell separator materials, methods for manufacturing a fuel cell separator, and fuel cell separators.

### Background Art

A fuel cell is a power generation device that outputs electrical energy through an electrochemical reaction between a fuel gas and an oxidant gas, and is formed by stacking a plurality of single cells. A single cell is composed of: an MEA (membrane electrode assembly) or MEGA (membrane electrode gas diffusion layer assembly) in which catalyst layers are located on both sides of an electrolyte membrane; and separators located on both sides of the MEA or MEGA.

The separators are made of a material with high gas barrier properties, high electrical conduction properties, and appropriate mechanical strength. An example of the material is a composite material made of a mixture of graphite and a binder resin. The separators are obtained by thermoforming such a composite material so as to give a corrugated shape that will serve as channels for the fuel gas, the oxidant gas, or a cooling medium to the composite material.

PTL 1 and PTL 2 that will be described below are documents that disclose a technique in which a composite material made of a mixture of graphite and a binder resin is used as a separator material.

PTL 1 discloses a fuel cell separator in which a hydrophilic resin thermosetting coating is provided on a main surface of a base material that is a graphite-resin composite formed body having ribs and grooves on its surface, and discloses that a surface roughening treatment is performed so that at least part of the ribs and grooves has a surface roughness of 0.15 to 1.5 µm. This document also describes blasting as the surface roughening treatment.

PTL 2 discloses a fuel cell separator forming member in which a forming member containing graphite and a resin is sandwiched between releasable films. This document also discloses a method for manufacturing a fuel cell separator, in which the releasable films are removed after the fuel cell separator forming member is formed by thermocompression.

### Citation List

### Patent Literature

PTL 1: Japanese Unexamined Patent Application Publication No. 2015-38840
PTL 2: Japanese Unexamined Patent Application Publication No. 2006-128027

### Summary of Invention

### Technical Problem

When a composite material made of a mixture of graphite and a binder resin is used for a separator, the binder resin flows and moves toward the surfaces (toward the interfaces between a die and the composite material) during pressure forming, so that the separator surfaces are covered with the resin. Therefore, in order to improve electrical conduction properties, blasting is performed as described in PTL 1. In blasting, the resin at the separator surfaces is removed and the surface roughness of the separator surfaces is adjusted by blasting a blasting agent onto the separator surfaces. Since electrically conductive particles are thus exposed at the surfaces, it is ensured that the separator has sufficient electrical conduction properties.

However, in the case where blasting is performed, ridges of the separator are mainly scraped, and vertical walls connecting the ridges and grooves are little scraped and the vertical walls are covered with the resin. The channels therefore have low drainage performance. The channels with low drainage performance cause problems such as flooding.

As disclosed in PTL 2, in the case of using a separator material in which release films are located on both sides of a composite material, a separator is manufactured by removing the release films after thermoforming. In this case, graphite moves to the surfaces of the composite material (interfaces between the composite material and the release films) during the thermoforming. Therefore, it is not necessary to perform a surface treatment such as blasting. However, when removing the release films, the release films may remain on the separator. Such remaining release films may cause reduction in electrical conduction properties.

Therefore, in view of the above circumstances, it is a primary object of the present disclosure to provide a fuel cell separator material with which a fuel cell separator having sufficient electrical conduction properties and also having improved drainage performance at the same time can be manufactured by a simple process, a method for manufacturing a fuel cell separator using the fuel cell separator material, and the fuel cell separator.

### Solution to Problem

The present disclosure provides, as one aspect for solving the above problems, a fuel cell separator material including: a composite material containing electrically conductive particles and a binder resin; and soluble resin layers located on both sides of the composite material.

In the above separator material, the soluble resin layers may contain a soluble resin that is soluble in a polar solvent, and the soluble resin may contain at least one selected from polyvinyl alcohol, celluloses, polyacrylic acids, and starch. The soluble resin layers may have a thickness of 0.5 µm or more and 10 µm or less.

The present disclosure provides, as one aspect for solving the above problems, a method for manufacturing a fuel cell separator including: a production step of producing the above fuel cell separator material; a thermoforming step of giving a corrugated shape that is going to serve as channels to a surface of the separator material; and a removal step of removing the soluble resin layers by immersing the separator material in the polar solvent after the thermoforming step.

The present disclosure provides, as one aspect for solving the above problems, a fuel cell separator having on a surface a corrugated shape that serves as channels. The fuel cell separator is composed of a composite material containing electrically conductive particles and a binder resin, the corrugated shape includes ridges, grooves, and vertical walls connecting the ridges and the grooves, and a water contact angle of surfaces of the vertical walls is 80° or less.

### Advantageous Effects of Invention

According to the fuel cell separator material of the present disclosure, it is possible to manufacture a fuel cell separator having sufficient electrical conduction properties and also having improved drainage performance at the same time by a simple process. According to the method for manufacturing a fuel cell separator of the present disclosure, it is possible to manufacture a fuel cell separator having sufficient electrical conduction properties and also having improved drainage performance at the same time by a simple process. According to the fuel cell separator of the present disclosure, it is possible to improve drainage performance while ensuring sufficient electrical conduction properties.

### Brief Description of Drawings

[FIG. 1] FIG. 1 is a schematic sectional view illustrating a method for manufacturing a separator material 50.
[FIG. 2] FIG. 2 is a flowchart of a manufacturing method of an embodiment.
[FIG. 3] FIG. 3 shows schematic views illustrating the manufacturing method of the embodiment.
[FIG. 4] FIG. 4 shows schematic views illustrating a conventional method for manufacturing a separator.
[FIG. 5] FIG. 5 is a schematic view of a section of a separator 100.
[FIG. 6] FIG. 6 is an enlarged schematic view of the section of the separator 100.
[FIG. 7] FIG. 7 is a schematic diagram illustrating a method for evaluating electrical conduction properties.
[FIG. 8] FIG. 8 shows the results of drainage performance evaluation (water contact angle evaluation).

### Description of Embodiments

A fuel cell separator material, a method for manufacturing a fuel cell separator using the same, and a fuel cell separator according to the present disclosure will be described below using an embodiment.

### [Fuel Cell Separator Material]

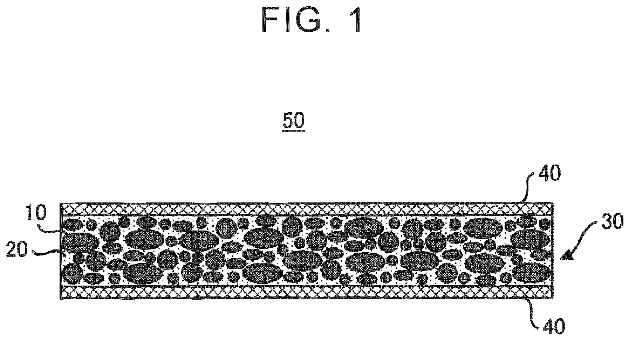

The fuel cell separator material of the present disclosure will be described using a fuel cell separator material 50 according to an embodiment. FIG. 1 is a schematic sectional view of the fuel cell separator material 50.

As shown in FIG. 1, the separator material 50 includes a composite material 30 containing electrically conductive particles 10 and a binder resin 20, and soluble resin layers 40 located on both sides of the composite material 30.

The separator material 50 is in the form of a sheet, and can be given a corrugated shape by a predetermined die. A fuel cell separator can be manufactured by removing the soluble resin layers 40 after the forming. That is, in the separator material 50, the composite material 30 is a portion that serves as a separator, and the soluble resin layers 40 are portions that serve as protective layers during the forming.

### <Electrically Conductive Particles 10>

The electrically conductive particles 10 are a material for ensuring sufficient electrical conduction properties of the composite material 30. Although the type of the electrically conductive particles 10 is not particularly limited, examples thereof include graphite particles, metal powder, and carbon fibers. Examples of graphite particles include artificial graphite particles, natural graphite particles, and expanded graphite particles. An example of metal powder is powder of a corrosion resistant metal compound. The corrosion resistant metal compound is, for example, titanium nitride. A plurality of types of materials may be mixed and used as the electrically conductive particles 10 according to the desired performance. In some embodiments, the electrically conductive particles 10 may be a mixture of graphite particles and carbon fibers. The ratio between graphite particles and carbon fibers is not particularly limited, but may be, for example, graphite particles:carbon fibers = 10:1 to 15:1.

The primary particle size of the electrically conductive particles 10 is not particularly limited, but may be, for example, 1 µm or more, 100 µm or less, or 30 µm or less. The Feret diameter is used as the primary particle size of the electrically conductive particles 10. As a method for measuring the primary particle size of the electrically conductive particles 10, the primary particle sizes of 10 or more electrically conductive particles 10 can be measured with, for example, SEM, and the primary particle size of the electrically conductive particles 10 can be calculated from the average value of the measured primary particle sizes. The number of electrically conductive particles 10 that are measured may be 100 or more.

The content of the electrically conductive particles 10 in the composite material 30 is not particularly limited, but may be 60 wt% or more, 75 wt% or more, 90 wt% or less, or 85 wt% or less. If the content of the electrically conductive particles 10 is less than 60 wt%, a separator 100 may have reduced electrical conduction properties and increased electrical resistance. If the content of the electrically conductive particles 10 is higher than 90 wt%, the composite material 30 may have reduced strength.

### <Binder Resin 20>

The binder resin 20 is a material for ensuring the strength of the composite material 30. Although the type of the binder resin 20 is not particularly limited, examples thereof include epoxy resins, phenolic resins, and polypropylene resins.

The content of the binder resin 20 in the composite material 30 is not particularly limited, but may be 10 wt% or more, 15 wt% or more, 40 wt% or less, 30 wt% or less, or 25 wt% or less. If the content of the binder resin 20 is less than 10 wt%, the composite material 30 may have lower strength. If the content of the binder resin 20 is higher than 40 wt%, the composite material 30 may have reduced electrical conduction properties and increased electrical resistance.

### <Composite Material 30>

The composite material 30 may contain a material other than the electrically conductive particles 10 and the binder resin 20, but may consist of the electrically conductive particles 10 and the binder resin 20. The thickness of the composite material 30 is not particularly limited, and may be set as appropriate according to the purpose. For example, the thickness of the composite material 30 may be in the range of 100 µm or more and 1000 µm or less.

The method for manufacturing the composite material 30 is not particularly limited, and it can be manufactured by a known method. For example, it can be obtained by mixing the electrically conductive particles 10 and the binder resin 20 in a solvent, applying the obtained mixture on a release sheet, and drying the mixture. The method for applying the mixture is not particularly limited, and any known method may be used as appropriate. For example, the mixture may be applied using a bar coater.

### <Soluble Resin Layer 40>

The soluble resin layer 40 contains a soluble resin that is soluble in a polar solvent. The soluble resin layer 40 may contain 50 wt% or more of the soluble resin. From the standpoint of further improving the solubility, the content of the soluble resin may be 80 wt% or more, 90 wt% or more, 95 wt% or more, or 100 wt% (the soluble resin layer 40 consists of the soluble resin).

The soluble resin is not particularly limited as long as it is soluble in a polar solvent. From the standpoint of easy removal with a polar solvent, the soluble resin may contain at least one selected from polyvinyl alcohol, celluloses, polyacrylic acids, and starch. The celluloses may be any celluloses with solubility. An example thereof is carboxymethyl cellulose. From the standpoint of improving the solubility, the soluble resin may consist of polyvinyl alcohol, may consist of a cellulose, may consist of a polyacrylic acid, or may consist of starch. The soluble resin may consist of at least one selected from polyvinyl alcohol, celluloses, polyacrylic acids, and starch.

The type of the polar solvent is not particularly limited as long as it can remove the soluble resin layer 40. Examples thereof include water, C1-3 lower alcohols (e.g., ethanol), glycols, DMSO, and phenols. Water or ethanol that is highly volatile may be used in view of the ease of solvent removal. Water may be selected from the standpoint of the ease of handling and safety.

Although the thickness of the soluble resin layer 40 is not particularly limited, it may be 0.5 µm or more and 10 µm or less from the standpoint of satisfactorily transferring the corrugated shape with the die and reducing variation in thickness of the corrugated shape. From the standpoint of easy removal with a polar solvent, the thickness of the soluble resin layer 40 may be 5 mm or less, or 3 mm or less.

The method for disposing the soluble resin layers 40 on the composite material 30 in the form of a sheet is not particularly limited, and a known method can be used as appropriate. For example, a bar coater or spray coating can be used.

### <Effects>

The separator material 50 is a material in which the soluble resin layers 40 are located on both entire surfaces of the composite material 30 in the form of a sheet. Accordingly, the soluble resin layers 40 can be easily removed by immersing the separator material 50 in a polar solvent after forming the separator material 50. The fuel cell separator can therefore be manufactured by a simple process. Moreover, the fuel cell separator obtained by such a method has sufficient electrical conduction properties and also has good drainage performance. This will be described in detail later.

The fuel cell separator material of the present disclosure has been described above using the embodiment. According to the fuel cell separator material of the present disclosure, it is possible to manufacture a fuel cell separator having sufficient electrical conduction properties and also having improved drainage performance at the same time by a simple process.

### [Method for Manufacturing Fuel Cell Separator]

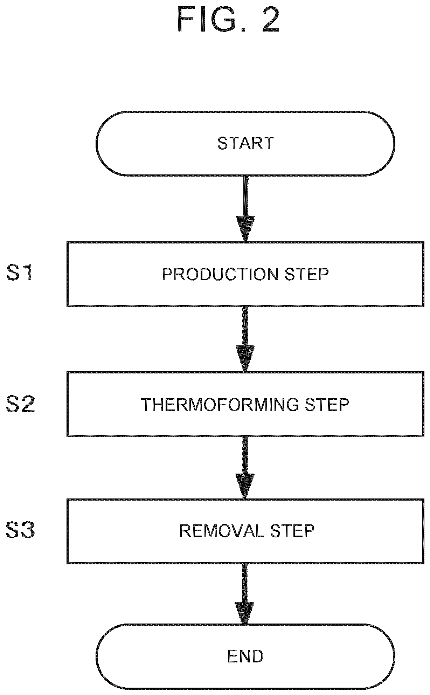

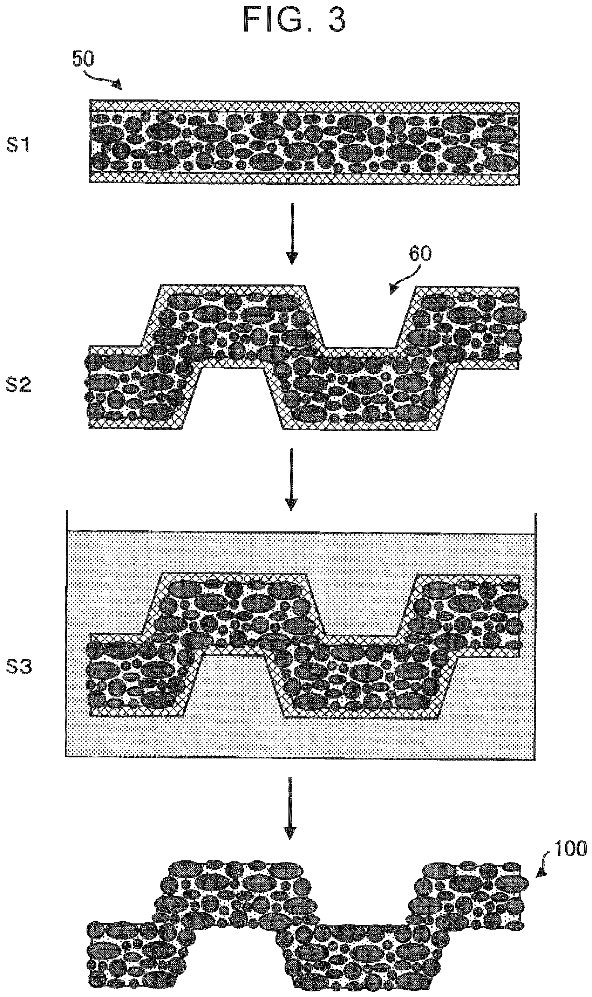

The method for manufacturing a fuel cell separator of the present disclosure will be described using the embodiment. The embodiment is a method for manufacturing a fuel cell separator 100 using the fuel cell separator material 50 described above. FIG. 2 is a flowchart of the manufacturing method of the embodiment. FIG. 3 shows schematic views illustrating the manufacturing method of the embodiment.

As shown in FIGS. 2 and 3, the manufacturing method of the embodiment includes: a separator material production step S1 of producing the separator material 50 described above; a thermoforming step S2 of giving a corrugated shape 60 that will serve as channels to the surface of the separator material 50; and a removal step S3 of removing the soluble resin layers 40 by immersing the separator material 50 in a polar solvent after the thermoforming step S2. The fuel cell separator 100 can thus be manufactured.

### <Separator Material Production Step S1>

In the separator material production step S1, the separator material 50 is produced. Since the configuration and production method of the separator material 50 are described above, description thereof will be omitted.

### <Thermoforming Step S2>

In the thermoforming step S2, the corrugated shape 60 that will serve as channels is given to the surface of the separator material 50. Typically, the corrugated shape 60 is given by pressing a heated die against the separator material 50.

The heating temperature of the die is not particularly limited, and may be set to the glass transition temperature of the binder resin 20 plus about 50°C. For example, it is in the range of 180°C to 200°C. The pressure for pressing the die is not particularly limited as long as it is high enough to appropriately give the corrugated shape 60. For example, it is in the range of 20 MPa to 50 MPa. The pressing time of the die is not particularly limited as long as it is long enough to appropriately give the corrugated shape 60. For example, it is 5 to 120 seconds. Too long thermoforming time may make the soluble resin layers 40 unremovable.

In the embodiment, a release agent does not have to be applied to the separator material 50 in the thermoforming step S2. This is because the soluble resin layers 40 are disposed on both sides of the separator material 50.

### <Removal Step S3>

The removal step S3 is performed after the thermoforming step S2, and removes (dissolves) the soluble resin layers 40 by immersing the separator material 50 in a polar solvent. The soluble resin layers 40 are thus completely removed from the separator material 50, so that the separator 100 is obtained.

The type of polar solvent used in the removal step S3 is not particularly limited as long as it can remove the soluble resin layer 40. Examples thereof include water, C1-3 lower alcohols (e.g., ethanol), glycols, DMSO, and phenols. Water or ethanol that is highly volatile may be used in view of the ease of solvent removal. Water may be selected from the standpoint of the ease of handling and safety.

The polar solvent may be heated in the removal step S3. The soluble resin layers 40 can thus be easily removed and dissolved. The heating temperature of the polar solvent may be, for example, 50°C or higher, or 85°C or higher. Although the upper limit is not particularly limited, the heating temperature of the polar solvent may be 95°C or less. Ultrasonic waves may be applied to the separator material 50 in the removal step S3. The soluble resin layers 40 can thus be easily removed and dissolved. In the removal step S3, the immersion time of the separator material 50 in the polar solvent is not particularly limited, but may be, for example, 5 minutes to 30 minutes.

After the removal step S3, the obtained separator 100 may be dried. The drying method is not particularly limited, and may be natural drying or heat drying.

### <Reason Why Surface Treatment Is Unnecessary>

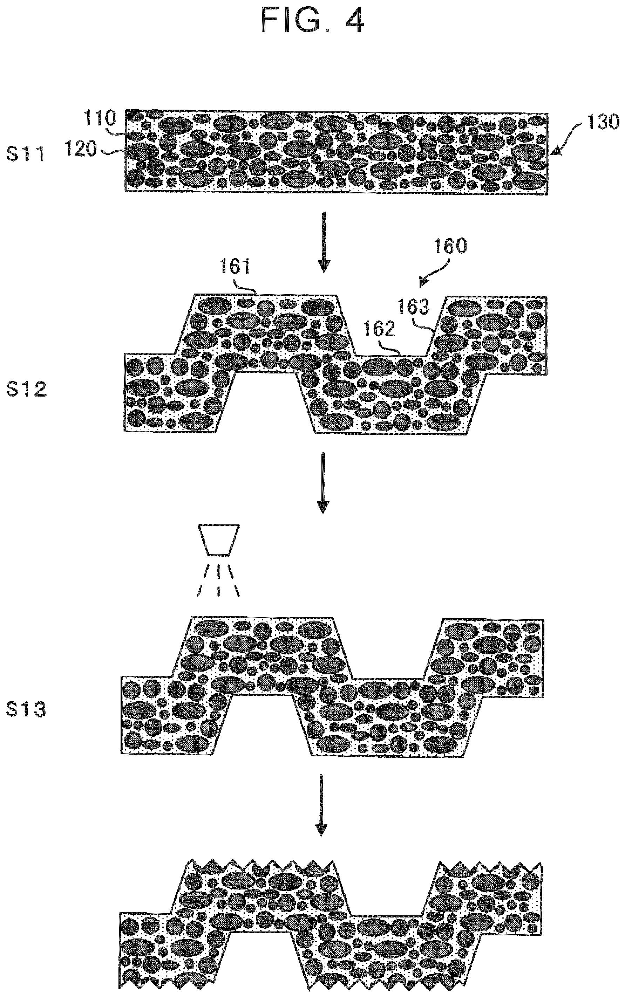

FIG. 4 shows schematic views illustrating a conventional method for manufacturing a fuel cell separator using blasting as a surface treatment. As shown in FIG. 4, in the conventional manufacturing method, a composite material 130 in the form of a sheet is first prepared (step S11), the composite material 130 is thermoformed to give a corrugated shape 160 to its surface (step S12). The composite material 130 with the corrugated shape 160 is then subjected to blasting (step S13). A separator is thus manufactured.

As described above, the composite material 130 in the form of a sheet used in the conventional manufacturing method does not have soluble resin layers on its surfaces. Therefore, when thermoformed, electrically conductive particles 110 move toward the surfaces of the composite material 130, but a binder resin 120 remains at the surfaces and the electrically conductive particles 110 cannot be exposed at the surfaces. Accordingly, in the conventional manufacturing method, the surfaces of ridges 161 are subjected to blasting to expose the electrically conductive particles 110 in order to ensure sufficient electrical conduction properties. In such blasting, however, the ridges 161 are mainly scraped, and grooves 162 and vertical walls 163 (especially the vertical walls 163) are little scraped and the surfaces thereof are covered with the binder resin 120. The channels therefore have low drainage performance. The channels with low drainage performance cause problems such as flooding. In PTL 1, a hydrophilic resin is applied to the grooves 162 and the vertical walls 163 in order to solve such problems of the drainage performance.

On the other hand, in the manufacturing method of the embodiment, the separator material 50 in which the soluble resin layers 40 are located on both sides of the composite material 30 in the form of a sheet is prepared in step S1. Thermoforming is then performed to give the corrugated shape 60 to the separator material 50. At this time, the electrically conductive particles 10 move so as to protrude from the surfaces of the composite material 30 (interfaces between the composite material 30 and the soluble resin layers 40). The separator material 50 is then immersed in a polar solvent to remove the soluble resin layers 40. The separator 100 with the electrically conductive particles 10 exposed at its surfaces can thus be obtained.

As described above, in the manufacturing method of the embodiment, since the soluble resin layers 40 are located on both sides of the composite material 30, the electrically conductive particles 10 can be moved to the surfaces of the composite material 30 during thermoforming. That is, the electrically conductive particles 10 can be selectively exposed at the surfaces of the composite material 30. Moreover, the soluble resin layers 40 can be easily removed with a polar solvent. Therefore, in the separator 100 produced by the manufacturing method of the embodiment, the electrically conductive particles 10 are smoothly exposed at the surfaces (all surfaces including ridges 61, grooves 62, and vertical walls 63). Accordingly, no surface treatment such as blasting is necessary. Moreover, since no surface treatment is necessary, there is no need to clean an abrasive such as a blasting material.

### <Advantages of Using Soluble Resin Layers 40>

When performing thermoforming, a release agent is usually applied in order to facilitate removal of a material from a die. In the conventional manufacturing method, no soluble resin layers are located on the surfaces of the composite material 130. Therefore, a release agent is directly applied to the composite material 130. The release agent therefore penetrates into the composite material 130. The release agent having penetrated into the composite material 130 may be released within a fuel cell and may contaminate a power generation element such as an MEGA and reduce the fuel cell performance.

On the other hand, in the manufacturing method of the embodiment, since the soluble resin layers 40 are disposed on both sides of the separator material 50, contact between the binder resin 20 and the die is reduced. Therefore, it is not necessary to apply a release agent. Accordingly, such problems as described above will not occur.

As described in PTL 2, there is also a technique of manufacturing a separator by thermoforming a separator material in which release layers are located on both sides of a composite material in the form of a sheet and then removing the release layers. With such a technique, electrically conductive particles can be certainly exposed at the surfaces. However, the release layers may remain on the separator after the thermoforming. The release layers remaining on the separator may cause reduction in electrical conduction properties. Moreover, in order to completely remove the release layers after the thermoforming, the release layers need to have a certain thickness or more, and there are limitations on the percentage elongation and heat resistance of the material so that the release layers will not get torn. It is therefore necessary to use an expensive resin for the release layers. Furthermore, with the release layers having a certain thickness or more, the corrugated shape may not be able to be transferred appropriately.

On the other hand, the manufacturing method of the embodiment is superior in this respect because the soluble resin layers 40 can be completely removed by merely immersing the separator material 50 in a polar solvent. In addition, the soluble resin layers 40 need only be soluble in a polar solvent and need not be unnecessarily thick like the release layers. This facilitates transfer of the corrugated shape 60.

The method for manufacturing a fuel cell separator of the present disclosure has been described above using the embodiment. According to the method for manufacturing a fuel cell separator of the present disclosure, it is possible to manufacture a fuel cell separator having sufficient electrical conduction properties and also having improved drainage performance at the same time. Moreover, since no surface treatment such as blasting is necessary, a fuel cell separator can be manufactured by a simple process.

### [Fuel Cell Separator]

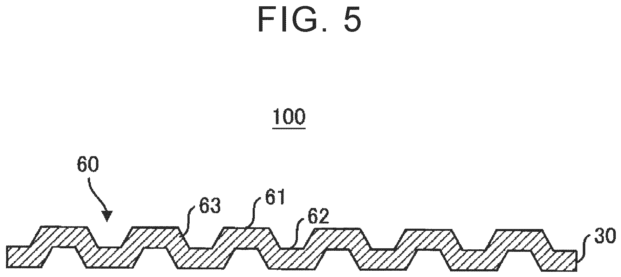

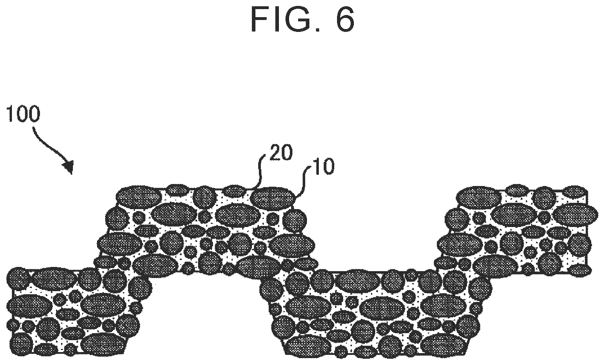

The fuel cell separator of the present disclosure will be described using the fuel cell separator 100 according to the embodiment. The fuel cell separator 100 is a separator manufactured by the manufacturing method described above. A schematic view of a section of the separator 100 is shown in FIG. 5. An enlarged schematic view of the section of the separator 100 is shown in FIG. 6.

The separator 100 is made of the composite material 30 containing the electrically conductive particles 10 and the binder resin 20, and has the corrugated shape 60 serving as channels on its surfaces. Since the composite material 30 has been described above, description thereof will be omitted.

### <Corrugated Shape 60>

As shown in FIG. 5, the separator 100 (composite material 30) has the corrugated shape 60 serving as channels on its surfaces. The corrugated shape 60 has ridges 61, grooves 62, and vertical walls 63 connecting the ridges 61 and the grooves 62. The channels are channels for causing a fuel gas, an oxidant gas, or a cooling medium to flow through a fuel cell. Typically, the separator 100 has fuel gas or oxidant gas channels on its one side, and cooling medium channels on the other side.

### (Ridges 61)

The ridges 61 are portions that contact a power generation element such as an MEA or an MEGA in a fuel cell, and are portions that ensure electrical conduction between the separator 100 and the power generation element. The electrically conductive particles 10 are exposed at the surfaces of the ridges 61. This ensures sufficient electrical conduction properties.

The surface roughness of the ridges 61 is not particularly limited, but may be, for example, 0.1 µm or more, 0.5 µm or more, 2 µm or less, or 1.8 µm or less. The surface roughness of the ridges 61 being within the above range indicates that the electrically conductive particles 10 are sufficiently exposed at the surfaces, and can improve the electrical conduction properties.

The water contact angle of the surfaces of the ridges 61 is not particularly limited, but may be, for example, 80° or less. The water contact angle of the surfaces of the ridges 61 being 80° or less indicates that the electrically conductive particles 10 are sufficiently exposed at the surfaces, and can improve the electrical conduction properties. The smaller the water contact angle, the greater this effect.

In the present disclosure, the surface roughness can be measured according to ISO 25178 using a microscope. The water contact angle can be measured with a contact angle meter based on a drop method (according to JIS R 3257).

### (Grooves 62)

The grooves 62 are portions that form the bottom surfaces of the channels. The electrically conductive particles 10 are exposed at the surfaces of the grooves 62. This ensures the drainage performance.

The surface roughness of the grooves 62 is not particularly limited, but may be, for example, 0.1 µm or more, 0.5 µm or more, 2 µm or less, or 1.8 µm or less. The surface roughness of the grooves 62 being within the above range indicates that the electrically conductive particles 10 are sufficiently exposed at the surfaces, and can improve the drainage performance.

The water contact angle of the surfaces of the grooves 62 is not particularly limited, but may be, for example, 80° or less. The water contact angle of the surfaces of the grooves 62 being 80° or less indicates that the electrically conductive particles 10 are sufficiently exposed at the surfaces, and can improve the drainage performance. The smaller the water contact angle, the greater this effect.

### (Vertical Walls 63)

The vertical walls 63 are portions that form the side surfaces of the channels. The electrically conductive particles 10 are exposed at the surfaces of the vertical walls 63. This ensures the drainage performance.

The separator 100 has one characteristic in the configuration of the vertical walls 63. That is, the vertical walls 63 has a surface roughness of 0.1 µm or more and 2 µm or less and a water contact angle of 80° or less. This indicates that the electrically conductive particles 10 are sufficiently exposed at the surfaces, and can improve the drainage performance.

The surface roughness of the vertical walls 63 may be 0.5 µm or more, or 1.8 µm or less. The smaller the water contact angle of the vertical walls 63, the greater the above effect.

The fuel cell separator of the present disclosure has been described above using the embodiment. According to the fuel cell separator of the present disclosure, it is possible to improve drainage performance while ensuring sufficient electrical conduction properties.

Hereinafter, the present disclosure will be further described using an example.

### [Production of Separator]

Separators of Example and Comparative Examples 1 to 4 were produced by the following methods.

### <Example 1>

A main agent, curing agent, and toughening agent shown in Table 1 were dissolved in a solvent (methyl ethyl ketone) and stirred and mixed, and a curing accelerator dissolved in methanol was then added to prepare a binder resin (epoxy resin). Thereafter, electrically conductive particles (mixture of graphite powder and carbon fibers, graphite powder: carbon fibers = 14:1 (ratio by weight)) were added and stirred. The resulting mixture was applied to a release film using a bar coater and dried to obtain a composite material in the form of a sheet (thickness: 600 µm). In the composite material, the ratio between the electrically conductive particles and the binder resin was conductive particles:binder resin = 75:25 (wt%). Polyvinyl alcohol dissolved in pure water was applied to a release film using the bar coater and dried to obtain a soluble resin layer in the form of a sheet (thickness: 5 µm). The soluble resin layers thus obtained were attached to both sides of the composite material to obtain a separator material.

Subsequently, the separator material was subjected to press forming (thermoforming) with a die under the conditions of 180°C, one minute, and 30 MPa to give a corrugated shape to the separator material. The pressed separator material was then immersed in hot water of 80°C for 10 minutes to completely remove the soluble resin layers. At this time, ultrasonic waves were applied to stir the hot water. Lastly, the obtained separator was heated to 100°C and dried for one hour to obtain the separator of Example 1.

### <Comparative Example 1>

The separator of Comparative Example 1 was obtained by applying a release agent to the composite material in the form of a sheet (produced in Example 1) and performing thermoforming under the same conditions as in Example 1, as shown in Table 2.

### <Comparative Example 2>

The separator of Comparative Example 2 was obtained by applying a release agent to the composite material in the form of a sheet (produced in Example 1), performing thermoforming under the same conditions as in Example 1, and then performing blasting, as shown in Table 2.

### <Comparative Example 3>

The separator of Comparative Example 3 was obtained by applying a release agent to the composite material in the form of a sheet (produced in Example 1), performing thermoforming under the same conditions as in Example 1, and then performing a laser treatment, as shown in Table 2.

### <Comparative Example 4>

The separator of Comparative Example 4 was obtained by producing a separator material in which insoluble resin layers (PET films, thickness: 12.5 mm) are located on both sides of the composite material in the form of a sheet (produced in Example 1), performing thermoforming under the same conditions as in Example 1, and then removing the insoluble resin layers, as shown in Table 2.

**[Table 1]**

| | | Material | Manufacturer | Mixing Ratio | Notes |
|---|---|---|---|---|---|
| Epoxy Resin | Main Agent | Cresol Novolak Epoxy Resin (EOCN-1025) | Nippon Kayaku Co., Ltd. | 100 | Epoxy Equivalent: 221g/eq |
| | Curing Agent | Novolak Phenolic Resin (BRG-556) | Aica Kogyo Company, Limited | 49 | Hydroxyl Group Equivalent: 105g/eq |
| | Toughening Agent | Phenoxy Resin (Phenotote YP-50) | NIPPON STEEL Chemical & Material Co., Ltd. | 35 | - |
| | Curing Accelerator | 2-Undecylimidazole (C11Z) | SHIKOKU KASEI HOLDINGS CORPORATION | 3 | - |
| Graphite Powder | | SPG-25 | SEC CARBON, LIMITED | - | |
| Carbon Fibers | | CFMP 150RE | Nippon Polymer Sangyo Co., Ltd. | - | |
| Soluble Resin Layers | | Polyvinyl Alcohol (KURARAY POVAL 22-88) | Kuraray Co., Ltd. | - | |

**[Table 2]**

| | Surface Resin Layers | Application of Release Agent | Surface Treatment |
|---|---|---|---|
| Example | Soluble Resin Layers | No | Not Performed |
| Comparative Example 1 | None | Yes | Not Performed |
| Comparative Example 2 | None | Yes | Performed (Blasting) |
| Comparative Example 3 | None | Yes | Performed (Laser Treatment) |
| Comparative Example 4 | Insoluble Resin Layers | No | Not Performed |

### [Evaluations]

The separators of Example 1 and Comparative Examples 1 to 4 were evaluated for their performance.

### <Evaluation of Electrical Conduction Properties>

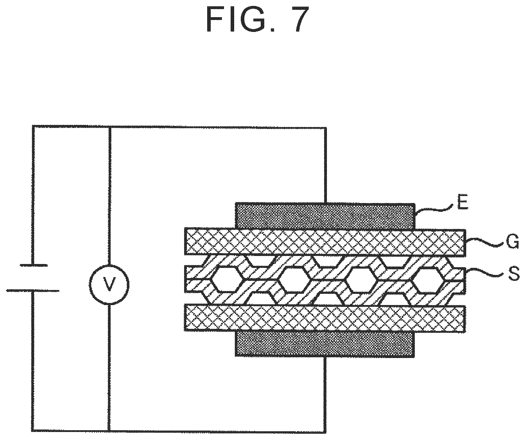

As shown in FIG. 7, two separators S were placed in close contact with each other, and gas diffusion layers G and gold-plated electrodes E were placed on both sides thereof. After this was pressed to an average surface pressure of 1.0 MPa, the potential difference between the electrodes was measured with the pressure reduced to an average surface pressure of 0.8 MPa, and the resistance of the separator was calculated. The test was performed three times for each example. The results are shown in Table 3.

**[Table 3]**

| | Example | Comparative Example 1 | Comparative Example 2 | Comparative Example 3 | Comparative Example 4 |
|---|---|---|---|---|---|
| Resistance Value (mΩ · cm²) | 27 | 49 | 31 | 28 | 55 |

As can be seen from Table 3, the resistance value of Example 1 was the lowest. This is considered to be because the proportion of the electrically conductive particles exposed at the surfaces of the ridges is the highest compared to Comparative Examples 1 to 4. Since Comparative Example 4 had the highest resistance value, evaluations that will be described below were not performed for Comparative Example 4.

### <Evaluation of Drainage Performance>

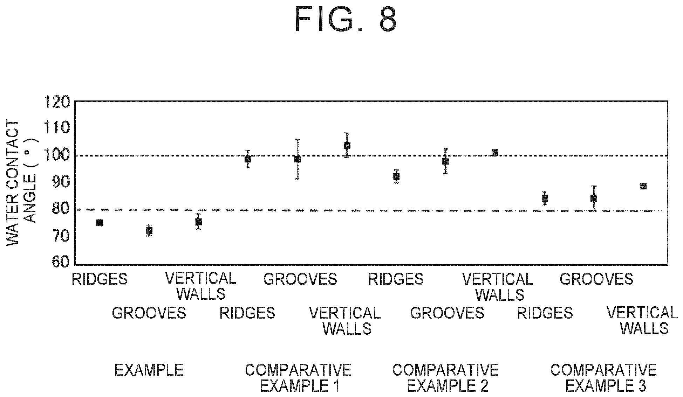

The water contact angles of the ridges, grooves, and vertical walls of each separator were measured. The measurement was performed using a contact angle meter (automatic microscopic contact angle meter MCA-J2 made by Kyowa Interface Science Co., Ltd.) based on a drop method (according to JIS R 3257). The results are shown in FIG. 8.

As can be seen from FIG. 8, the water contact angles of the separator of Example 1 were smaller than the water contact angles of Comparative Examples 1 to 3 for all of the regions, namely the ridges, grooves, and vertical walls. Example 1 is therefore considered to have higher drainage performance than Comparative Examples 1 to 3. Moreover, the results are considered to indicate that the proportion of the electrically conductive particles on the surfaces of the separator of Example 1 is higher than that of Comparative Examples 1 to 3 in all of the regions.

### <Evaluation of Surface Roughness>

The surface roughness of the ridges of each separator was contactlessly measured at arbitrary three points according to ISO 25178 using a microscope (VHX-7000 made by KEYENCE CORPORATION), and the average value was calculated. The results are shown in Table 4.

**[Table 4]**

| | Example | Comparative Example 1 | Comparative Example 2 | Comparative Example 3 |
|---|---|---|---|---|
| Surface Roughness (µm) | 1.65 | 2.29 | 3.21 | 3.97 |

As can be seen from Table 4, the surface roughness of Example 1 was the smallest. This indicates that the exposed electrically conductive particles are smooth. It was found that, for the separator of Example 1, there is no significant difference in measured surface roughness among the ridges, the grooves, and the vertical walls.

### Reference Signs List

10, 110 electrically conductive particles
20, 120 a binder resin
30, 130 a composite material
40 soluble resin layers
50 a separator material
60, 160 a corrugated shape
61, 161 ridges
62, 162 grooves
63, 163 vertical walls
100 a separator

## Claims

1. A fuel cell separator material, comprising:
a composite material containing electrically conductive particles and a binder resin; and
soluble resin layers located on both sides of the composite material.

2. The fuel cell separator material according to claim 1, wherein the soluble resin layers contain a soluble resin that is soluble in a polar solvent, and
the soluble resin contains at least one selected from polyvinyl alcohol, celluloses, polyacrylic acids, and starch.

3. The fuel cell separator material according to claim 1, wherein the soluble resin layers have a thickness of 0.5 µm or more and 10 µm or less.

4. A method for manufacturing a fuel cell separator, the method comprising:
producing the fuel cell separator material according to claim 1;
giving a corrugated shape that is going to serve as channels to a surface of the fuel cell separator material; and
removing the soluble resin layers by immersing the fuel cell separator material in a polar solvent after the giving the corrugated shape.

5. A fuel cell separator comprising a corrugated shape that serves as channels on a surface of the fuel cell separator, wherein
the fuel cell separator is composed of a composite material containing electrically conductive particles and a binder resin,
the corrugated shape includes ridges, grooves, and vertical walls connecting the ridges and the grooves, and
a water contact angle of surfaces of the vertical walls is 80° or less.
